# EUROPÄISCHE PATENTANMELDUNG

(11) **EP 4 079 502 A1**
(43) Veröffentlichungstag der Anmeldung: **26.10.2022**
(21) Anmeldenummer: 21169635.6
(22) Anmeldetag: 21.04.2021
(51) Int. Cl.: B32B 1/08, B32B 7/12, B32B 27/08, B32B 27/18, B32B 27/30, B32B 27/32, B32B 27/34

(54) **MEHRSCHICHTIGE ROHRLEITUNG**

(71) Anmelder: TI Automotive (Fuldabrück) GmbH, 34277 Fuldabrück (DE)
(72) Erfinder: HÄCKEL, Andre, 34513 Waldeck (DE); FAHRENHOLZ, Frank, 34128 Kassel (DE); SCHRAMOWSKI, Martin, 34134 Kassel (DE); ARNOLD, Siegfried, 34128 Kassel (DE)
(74) Vertreter: Andrejewski - Honke Patent- und Rechtsanwälte Partnerschaft mbB

(57) **Zusammenfassung**

Mehrschichtige Kraftfahrzeug-Rohrleitung, wobei zumindest eine Sperrschicht aus zumindest einem Material aus der Gruppe "Butendiol-Vinylalkohol-Copolymer (BVOH) und/oder aus Polyvinylalkohol (PVOH), Polymerblend mit BVOH, Polymerblend mit PVOH" vorgesehen ist. Auf der Außenseite der Sperrschicht ist zumindest eine Außenschicht aus Kunststoff angeordnet.

## Beschreibung

Die Erfindung betrifft eine mehrschichtige Kraftfahrzeug-Rohrleitung mit zumindest einer Sperrschicht und einer auf der Außenseite der Sperrschicht angeordneten Außenschicht. Die erfindungsgemäße mehrschichtige Kraftfahrzeug-Rohrleitung ist nach besonders empfohlener Ausführungsform der Erfindung eine Wasserstoff-Transportleitung bzw. eine Kraftfahrzeug-Rohrleitung zum Transport von Wasserstoff.

Wasserstoff gewinnt in der Automobilindustrie mehr und mehr an Bedeutung für die Versorgung von Brennstoffzellen in Kraftfahrzeugen. Insoweit sind auch bereits Kraftfahrzeug-Rohrleitungen für den Transport des Wasserstoffes bekannt. Wasserstoff zeichnet sich in diesem Zusammenhang durch den Nachteil aus, dass er eine relativ hohe Permeationsneigung in Bezug auf die Rohrwände einer solchen Rohrleitung zeigt. So ist man bemüht die Kraftfahrzeug-Rohrleitungen so auszugestalten, dass sie eine hohe Sperrwirkung bezüglich der Permeation von Wasserstoff aufweisen. Hierzu wurden bereits Polyamide mit hoher Kristallinität als Materialien für die Rohrwandungen eingesetzt. Um die mechanische Widerstandsfähigkeit und die Widerstandsfähigkeit gegen Permeation zu erhöhen werden weiterhin auch relativ dickwandige Rohrleitungen verwendet. Diese sind aber im Hinblick auf den erforderlichen Materialaufwand und im Hinblick auf das entsprechende Gewicht der Rohrleitungen nachteilhaft. Insoweit besteht Verbesserungsbedarf.

Der Erfindung liegt das technische Problem zugrunde eine mehrschichtige Kraftfahrzeug-Rohrleitung der eingangs genannten Art anzugeben, die eine hohe Sperrwirkung gegenüber den durchzuleitenden fluiden Medien aufweist und die sich insbesondere durch eine geringe Permeation von Wasserstoff durch die Rohrleitungswandungen auszeichnet und die fernerhin relativ wenig aufwendig und mit verhältnismäßig geringen Wanddicken aufgebaut ist.

Zur Lösung dieses technischen Problems lehrt die Erfindung eine mehrschichtige Kraftfahrzeug-Rohrleitung, wobei zumindest eine Sperrschicht aus zumindest einem Material aus der Gruppe "Butendiol-Vinylalkohol-Copolymer (BVOH), Polyvinylalkohol (PVOH), Polymerblend mit BVOH, Polymerblend mit PVOH" vorgesehen ist und wobei auf der Außenseite der Sperrschicht zumindest eine Außenschicht aus Kunststoff angeordnet ist. Es liegt im Rahmen der Erfindung, dass diese Kraftfahrzeug-Rohrleitung eine Wasserstofftransport-Rohrleitung für Kraftfahrzeuge ist. Besonders bevorzugt ist Butendiol-Vinylalkohol-Copolymer (BVOH) und/oder ein Polymerblend mit BVOH für die erfindungsgemäße Sperrschicht. Dieses Material hat sich - insbesondere im Hinblick auf seine Sperrwirkung gegenüber Wasserstoff - besonders bewährt. Es liegt weiterhin im Rahmen der Erfindung, dass auf der Innenseite der Sperrschicht zumindest eine Innenschicht aus Kunststoff angeordnet ist.

Der Erfindung liegt die Erkenntnis zugrunde, dass die erfindungsgemäße Ausgestaltung der Kraftfahrzeug-Rohrleitung eine hohe Sperrwirkung gegenüber durch die Rohrleitung geleiteten fluiden Medien aufweist und sich vor allem durch eine überraschend geringe Permeation gegenüber durchgeleitetem Wasserstoff auszeichnet. Nichtsdestoweniger kann die erfindungsgemäße Kraftfahrzeug-Rohrleitung relativ wenig aufwendig ausgestaltet werden und kann insbesondere durch eine im Vergleich zu den in diesem Zusammenhang bislang bekannten Rohrleitungen mit einer verhältnismäßig geringen Rohrwanddicke ausgebildet werden. Zusätzlich zeichnet sich die erfindungsgemäße Kraftfahrzeug-Rohrleitung durch eine hohe mechanische Widerstandsfähigkeit und insbesondere durch eine ausgezeichnete Widerstandsfähigkeit gegenüber hohen Drücken aus. Weiterhin ist die Temperaturstabilität der erfindungsgemäßen Rohrleitung als sehr vorteilhaft hervorzuheben. Im Rahmen der Erfindung gibt es verschiedene Möglichkeiten zur spezifischen Ausgestaltung der erfindungsgemäßen Rohrleitung.

Dass eine erfindungsgemäße Sperrschicht aus BVOH und/oder aus PVOH vorgesehen ist, meint im Rahmen der Erfindung insbesondere, dass die Sperrschicht zu mindestens 85 Gew.-%, vorzugsweise zu mindestens 90 Gew.-% und bevorzugt zu mindestens 95 Gew.-% aus BVOH und/oder aus PVOH und besonders bevorzugt aus BVOH besteht. Eine ganz besonders bevorzugte Ausführungsform der Erfindung zeichnet sich dadurch aus, dass die Sperrschicht zu mindestens 98 Gew.-% aus BVOH und/oder aus PVOH besteht und ganz besonders bevorzugt aus BVOH besteht.

Dass eine erfindungsgemäße Sperrschicht aus einem Polymerblend mit BVOH oder aus einem Polymerblend mit PVOH besteht, meint im Rahmen der Erfindung insbesondere, dass dieses Polymerblend zu mindestens 50 Gew.-% und bevorzugt zu mindestens 55 Gew.-% aus BVOH bzw. aus PVOH besteht. Es liegt im Rahmen der Erfindung, dass Polymerblends von BVOH mit EVOH (Ethylen-Vinylalkohol-Copolymer) oder von PVOH mit EVOH eingesetzt werden. Grundsätzlich kann auch EVOH als Material für die erfindungsgemäße Sperrschicht verwendet werden.

Erfindungsgemäß ist auf der Außenseite der Sperrschicht zumindest eine Außenschicht aus Kunststoff vorgesehen. Es empfiehlt sich, dass die Außenschicht aus einem Kunststoff bzw. im Wesentlichen aus einem Kunststoff aus der Gruppe "Polyamid, Polyolefin" besteht. Zweckmäßigerweise besteht die Außenschicht zu mindestens 95 Gew.-% aus einem Kunststoff aus der Gruppe "Polyamid, Polyolefin". Eine sehr bevorzugte Ausführungsform der Erfindung ist dadurch gekennzeichnet, dass die Außenschicht aus Polyamid besteht bzw. im Wesentlichen besteht. Eine sehr bewährte Ausführungsform zeichnet sich in diesem Zusammenhang dadurch aus, dass die Außenschicht aus Polyamid 12 und/oder aus Polyamid 612 besteht bzw. im Wesentlichen besteht.

Wenn hier und nachfolgend ausgeführt wird, dass eine Schicht aus Polyolefin besteht bzw. im Wesentlichen besteht, ist damit insbesondere gemeint, dass die Schicht aus Polypropylen und/oder aus Polyethylen und bevorzugt aus HDPE besteht bzw. im Wesentlichen besteht. - Wenn im Rahmen der Erfindung eine Schicht aus Polyamid bzw. im Wesentlichen aus Polyamid besteht, kann es sich auch um ein semiaromatisches Polyamid handeln.

Es liegt im Rahmen der Erfindung, dass zwischen der Sperrschicht und der Außenschicht zumindest eine und vorzugsweise eine erste Haftvermittlerschicht aus Kunststoff angeordnet ist. Nach empfohlener Ausführungsform der Erfindung ist diese erste Haftvermittlerschicht unmittelbar und ohne Zwischenschaltung weiterer Schichten an der Innenseite der Außenschicht aus Kunststoff angeschlossen. Zweckmäßigerweise ist die erste Haftvermittlerschicht aus Kunststoff unmittelbar und ohne Zwischenschaltung weiterer Schichten an der Außenseite der Sperrschicht angeschlossen. Es ist aber auch möglich, dass zwischen der ersten Haftvermittlerschicht und der Außenschicht und/oder zwischen der ersten Haftvermittlerschicht und der Sperrschicht zumindest eine weitere Schicht - insbesondere aus Kunststoff - zwischengeschaltet ist. Eine besonders bewährte Ausführungsform der Erfindung ist dadurch gekennzeichnet, dass die erste Haftvermittlerschicht aus einem Polyamid bzw. im Wesentlichen aus einem Polyamid besteht. Vorzugsweise besteht die erste Haftvermittlerschicht zu mindestens 90 Gew.-% aus dem Polyamid. Als Polyamid für die erste Haftvermittlerschicht kann beispielsweise Polyamid 6 eingesetzt werden.

Es liegt im Rahmen der Erfindung, dass auf der Innenseite der Sperrschicht zumindest eine Innenschicht aus Kunststoff angeordnet ist. Eine besonders bevorzugte Ausführungsform der Erfindung ist dadurch gekennzeichnet, dass die Innenschicht aus einem Kunststoff bzw. im Wesentlichen aus einem Kunststoff aus der Gruppe "Polyamid, Polyolefin, Fluorpolymer" besteht. Zweckmäßigerweise besteht die Innenschicht aus zumindest 95 Gew.-% aus zumindest einem der genannten Kunststoffe. Es hat sich im Rahmen der Erfindung bewährt, dass die Innenschicht zumindest bereichsweise elektrisch leitfähig ausgebildet ist. Nach einer besonders empfohlenen Ausführungsform der Erfindung besteht die Innenschicht aus einem Polyamid bzw. im Wesentlichen aus einem Polyamid. Es empfiehlt sich, dass die Innenschicht aus zumindest einem Polyamid aus der Gruppe "Polyamid 6, Polyamid 12, Polyamid 612" besteht bzw. im Wesentlichen besteht.

Eine bevorzugte Ausführungsform der Erfindung ist dadurch gekennzeichnet, dass zwischen der Sperrschicht und der Innenschicht zumindest eine und vorzugsweise eine zweite Haftvermittlerschicht aus Kunststoff angeordnet ist. Vorzugsweise besteht diese zweite Haftvermittlerschicht aus einem Polyamid bzw. im Wesentlichen aus einem Polyamid. Die zweite Haftvermittlerschicht kann beispielsweise aus Polyamid 6 bestehen bzw. im Wesentlichen bestehen. Es hat sich im Rahmen der Erfindung bewährt, dass die zweite Haftvermittlerschicht unmittelbar und ohne Zwischenschaltung weiterer Schichten an der Innenseite der Sperrschicht angeschlossen ist. Zweckmäßigerweise ist die zweite Haftvermittlerschicht unmittelbar und ohne Zwischenschaltung weiterer Schichten an der Außenseite der Innenschicht angeschlossen. Grundsätzlich können zwischen Innenschicht und zweiter Haftvermittlerschicht oder zwischen zweiter Haftvermittlerschicht und Sperrschicht aber auch weitere Schichten - insbesondere aus Kunststoff - angeordnet sein.

Es liegt im Rahmen der Erfindung, dass zumindest eine - insbesondere eine - an der Innenseite der Innenschicht anschließende innerste Schicht aus Kunststoff vorgesehen ist. Gemäß sehr bewährter Ausführungsform der Erfindung besteht die innerste Schicht aus einem Fluorpolymer bzw. im Wesentlichen aus einem Fluorpolymer. Besonders bevorzugt ist im Rahmen der Erfindung eine Ausführungsform, bei der eine innerste Schicht vorgesehen ist die aus ETFE die bzw. im Wesentlichen aus ETFE besteht. Bei ETFE handelt es sich um Ethylen-Tetrafluorethylen-Copolymer. Es liegt weiterhin im Rahmen der Erfindung, dass die innerste Schicht zumindest bereichsweise elektrisch leitfähig ausgebildet ist. Gemäß empfohlener Ausführungsform der Erfindung schließt die innerste Schicht unmittelbar und ohne Zwischenschaltung weiterer Schichten an die Innenseite der Innenschicht an. Grundsätzlich könnte hier aber auch zumindest eine weitere Schicht - insbesondere aus Kunststoff - zwischengeschaltet sein.

Eine empfohlene Ausführungsform der Erfindung ist dadurch gekennzeichnet, dass die Dicke der Sperrschicht zumindest 5 %, vorzugsweise zumindest 10 % der Gesamtwanddicke der Rohrleitung beträgt. Zweckmäßigerweise beträgt die Dicke der Außenschicht zumindest 10%, insbesondere zumindest 15 % der Gesamtwanddicke der Rohrleitung. Vorzugsweise beträgt die Dicke der Innenschicht zumindest 5%, vorzugsweise zumindest 10% der Gesamtwanddicke der Rohrleitung. Bei einer Ausführungsform der Erfindung beträgt die Dicke der Sperrschicht zumindest 15 %, die Dicke der Außenschicht zumindest 20 % und die Dicke der Innenschicht zumindest 15% der Gesamtwanddicke der Rohrleitung. Eine weitere Ausführungsform der Erfindung ist dadurch gekennzeichnet, dass die Dicke der Außenschicht zumindest 25 %, die Dicke der Sperrschicht zumindest 20 % und die Dicke der Innenschicht zumindest 20 % der Gesamtwanddicke der Rohrleitung beträgt. Die Gesamtwanddicke der Rohrleitung beträgt insbesondere 0,7 bis 2,5 mm, bevorzugt 0,8 bis 2 mm und besonders bevorzugt 0,8 bis 1,8 mm.

Die erfindungsgemäße mehrschichtige Kraftfahrzeug-Rohrleitung zeichnet sich durch eine überraschend hohe Sperrwirkung gegenüber durch die Rohrleitung geleiteten fluiden Medien aus. Vor allem zeichnet sich die Kraftfahrzeug-Rohrleitung durch eine hohe Barrierewirkung gegenüber Wasserstoff auf der durch die Rohrleitung geleitet wird. Hierzu trägt insbesondere die erfindungsgemäß ausgestaltete Sperrschicht bei. Es ist aber auch hervorzuheben, dass die erfindungsgemäße Kraftfahrzeug-Rohrleitung eine vorteilhaft hohe mechanische Widerstandsfähigkeit aufweist und vor allem eine hohe Widerstandsfähigkeit gegenüber hohen Innendrücken aufweist. Fernerhin zeichnet sich die erfindungsgemäße Kraftfahrzeug-Rohrleitung durch eine hohe Temperaturbeständigkeit aus. Nichtsdestoweniger kann die erfindungsgemäße Rohrleitung verhältnismäßig kostengünstig hergestellt werden.

Nachfolgend wird die Erfindung anhand einer lediglich ein Ausführungsbeispiel darstellenden Zeichnung näher erläutert. Es zeigen in schematischer Darstellung:

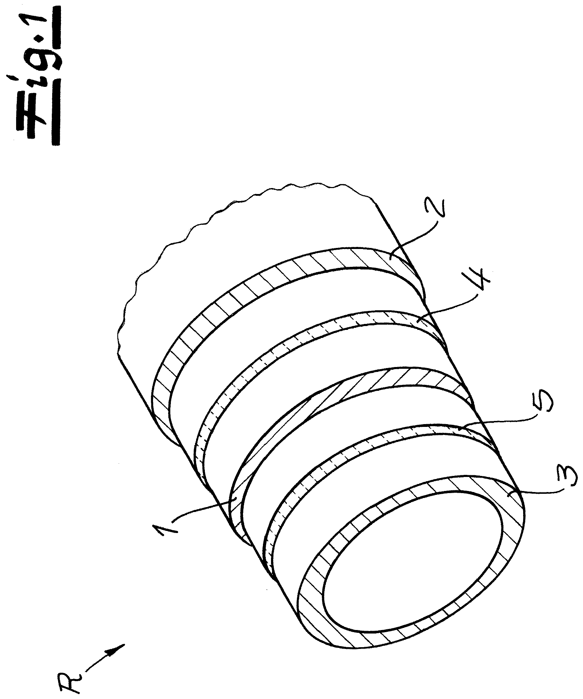

- Fig. 1: eine perspektivische Ansicht einer erfindungsgemäßen Rohrleitung,
- Fig. 2: einen Schnitt durch den Gegenstand gemäß Fig. 1 und
- Fig. 3: den Gegenstand nach Fig. 2 in einer weiteren Ausführungsform.

Die Figuren zeigen eine erfindungsgemäße mehrschichtige Kraftfahrzeug-Rohrleitung R mit einer Sperrschicht 1. Diese Kraftfahrzeug-Rohrleitung R ist eine Wasserstofftransport-Rohrleitung zur Durchleitung von Wasserstoff. Die Sperrschicht 1 besteht im Ausführungsbeispiel aus Butendiol-Vinylalkohol-Copolymer (BVOH) bzw. im Wesentlichen aus BVOH. An der Außenseite der Sperrschicht 1 ist im Ausführungsbeispiel nach den Figuren eine Außenschicht 2 aus Polyamid 12 angeordnet. Weiterhin weist die Rohrleitung R im Ausführungsbeispiel eine Innenschicht 3 auf, die beispielsweise aus Polyamid 6 besteht bzw. im Wesentlichen besteht. Diese Innenschicht 3 kann mit Leitfähigkeitszusätzen versehen sein, so dass die Innenschicht 3 zumindest an ihrer Innenseite elektrisch leitfähig ausgebildet ist.

Zwischen der Außenschicht 2 und der Sperrschicht 1 ist im Ausführungsbeispiel nach den Figuren eine erste Haftvermittlerschicht 4 angeordnet, die beispielsweise aus Polyamid 6 bzw. im Wesentlichen aus Polyamid 6 bestehen kann. - Zwischen der Innenschicht 3 und der Sperrschicht 1 ist im Ausführungsbeispiel nach den Figuren eine zweite Haftvermittlerschicht 5 zwischengeschaltet, die beispielsweise aus Polyamid 6 bzw. im Wesentlichen aus Polyamid 6 bestehen kann.

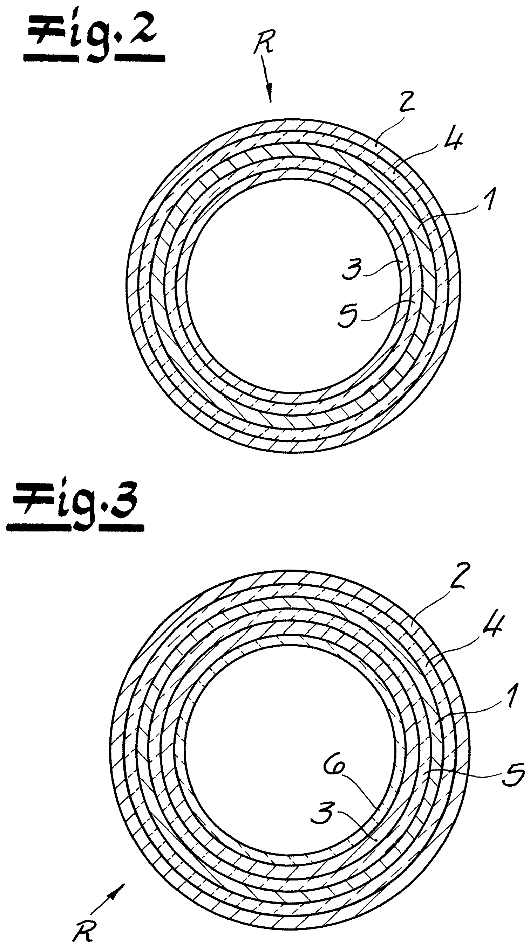

Bei der Ausführungsform der Fig. 2 weist die erfindungsgemäße Kraftfahrzeug-Rohrleitung R gesamt fünf Schichten auf, nämlich von außen nach innen die Außenschicht 2, die erste Haftvermittlerschicht 4, die Sperrschicht 1 aus BVOH, die zweite Haftvermittlerschicht 5 und die Innenschicht 3.

Im Ausführungsbeispiel der Fig. 3 sind insgesamt sechs Schichten der Rohrleitung vorgesehen. Hier ist im Vergleich zu der Ausführungsform nach Fig. 2 eine zusätzliche innerste Schicht 6 vorhanden. Diese innerste Schicht 6 besteht vorzugsweise aus einem Fluorpolymer bzw. im Wesentlichen aus einem Fluorpolymer und im Ausführungsbeispiel nach Fig. 3 zweckmäßigerweise aus ETFE bzw. im Wesentlichen aus ETFE. Dabei kann die innerste Schicht 6 Leitfähigkeitszusätze aufweisen, so dass die innerste Schicht 6 zumindest auf ihrer Innenseite leitfähig ausgebildet ist.

## Patentansprüche

1. Mehrschichtige Kraftfahrzeug-Rohrleitung, wobei zumindest eine Sperrschicht (1) aus zumindest einem Material aus der Gruppe "Butendiol-Vinylalkohol-Copolymer (BVOH), Polyvinylalkohol (PVOH), Polymerblend mit BVOH, Polymerblend mit PVOH" vorgesehen ist und wobei auf der Außenseite der Sperrschicht (1) zumindest eine Außenschicht (2) aus Kunststoff angeordnet ist.

2. Rohrleitung nach Anspruch 1, wobei die Kraftfahrzeug-Rohrleitung eine Wasserstofftransport-Rohrleitung ist.

3. Rohrleitung nach einem der Ansprüche 1 oder 2, wobei auf der Innenseite der Sperrschicht (1) zumindest eine Innenschicht (3) aus Kunststoff angeordnet ist.

4. Rohrleitung nach einem der Ansprüche 1 bis 3, wobei die Außenschicht (2) aus einem Kunststoff bzw. im Wesentlichen aus einem Kunststoff aus der Gruppe "Polyamid, Polyolefin" besteht.

5. Rohrleitung nach einem der Ansprüche 1 bis 4, wobei die Außenschicht (2) aus Polyamid 12 und/oder aus Polyamid 612 besteht bzw. im Wesentlichen besteht.

6. Rohrleitung nach einem der Ansprüche 1 bis 5, wobei zwischen der Sperrschicht (1) und der Außenschicht (2) zumindest eine erste Haftvermittlerschicht (4) aus Kunststoff angeordnet ist, wobei die erste Haftvermittlerschicht (4) vorzugsweise aus einem Polyamid und beispielsweise aus Polyamid 6 besteht bzw. im Wesentlichen besteht.

7. Rohrleitung nach einem der Ansprüche 1 bis 6, wobei die Innenschicht (3) aus einem Kunststoff bzw. im Wesentlichen aus einem Kunststoff aus der Gruppe "Polyamid, Polyolefin, Fluorpolymer" besteht.

8. Rohrleitung nach einem der Ansprüche 1 bis 7, wobei die Innenschicht (3) zumindest bereichsweise elektrisch leitfähig ausgebildet ist.

9. Rohrleitung nach einem der Ansprüche 1 bis 8, wobei die Innenschicht (3) aus zumindest einem Polyamid aus der Gruppe "Polyamid 6, Polyamid 12, Polyamid 612" besteht bzw. im Wesentlichen besteht.

10. Rohrleitung nach einem der Ansprüche 1 bis 9, wobei zwischen der Sperrschicht (1) und der Innenschicht (3) zumindest eine zweite Haftvermittlerschicht (5) aus Kunststoff angeordnet ist, wobei die zweite Haftvermittlerschicht (5) vorzugsweise aus einem Polyamid und beispielsweise aus Polyamid 6 besteht bzw. im Wesentlichen besteht.

11. Rohrleitung nach einem der Ansprüche 1 bis 10, wobei zumindest eine an der Innenseite der Innenschicht (3) anschließende innerste Schicht (6) aus Kunststoff vorgesehen ist, wobei die innerste Schicht (6) vorzugsweise aus einem Fluorpolymer bzw. im Wesentlichen aus einem Fluorpolymer besteht.

12. Rohrleitung nach einem der Ansprüche 1 bis 11, wobei die innerste Schicht (6) aus ETFE bzw. im Wesentlichen aus ETFE besteht.

13. Rohrleitung nach einem der Ansprüche 1 bis 12, wobei die innerste Schicht (6) zumindest bereichsweise elektrisch leitfähig ausgebildet ist.

14. Rohrleitung nach einem der Ansprüche 1 bis 13, wobei die Dicke der Sperrschicht (1) zumindest 5%, vorzugsweise zumindest 10% der Gesamtwanddicke der Rohrleitung beträgt.
